# EUROPÄISCHE PATENTSCHRIFT

(11) **EP 1 654 313 B1**
(45) Veröffentlichungstag und Bekanntmachung des Hinweises auf die Patenterteilung: **18.04.2007**
(21) Anmeldenummer: 04741052.7
(22) Anmeldetag: 15.07.2004
(51) Int. Cl.: C08K 5/3435, C08K 5/00, C08L 75/04

(54) **KUNSTSTOFF, INSBESONDERE POLYURETHAN ENTHALTEND EIN STERISCH GEHINDERTES, VERESTERTES AMIN**
PLASTIC, PARTICULARLY A STERICALLY HINDERED, ESTERIFIED AMINE CONTAINING POLYURETHANE
PLASTIQUE, NOTAMMENT POLYURETHANE CONTENANT UNE AMINE ESTERIFIEE A ENCOMBREMENT STERIQUE

(30) Priorität: 08.08.2003 DE 10336883
(43) Veröffentlichungstag der Anmeldung: 10.05.2006
(73) Patentinhaber: BASF Aktiengesellschaft, 67056 Ludwigshafen (DE)
(72) Erfinder: KREITSCHMANN, Mirko, 52064 Aachen (DE); MALZ, Hauke, 49356 Diepholz (DE); FLUG, Thomas, 49419 Wagenfeld (DE); RYBICKI, Sylvia, 49179 Ostercappeln (DE)
(86) Internationale Anmeldenummer: PCT/EP2004/007876
(87) Internationale Veröffentlichungsnummer: WO 2005/017019

(56) Entgegenhaltungen:
- DE-A- 10 148 702
- US-A1- 2001 053 841
- US-B1- 6 518 389

## Beschreibung

Die Erfindung betrifft thermoplastisches Polyurethan enthaltend sterisch gehindertes, verestertes Amin (I), das einen Gehalt an Titan von kleiner 100 ppm, bevorzugt kleiner 30 ppm, besonders bevorzugt zwischen 0 und 5 ppm, bezogen auf das Gewicht von (I), aufweist, wobei als (I) die folgende Verbindung in dem Polyurethan vorliegt: 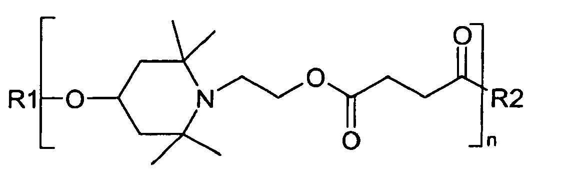 mit den folgenden Bedeutungen für n, R1 und R2:
- n:: eine ganze Zahl von 1 bis 100,
- R1:: ein Wasserstoffatom, geradkettige, verzweigte oder cyclische Alkylreste mit 1 bis 12 Kohlenstoffatomen,
- R2:: ein Wasserstoffatom, geradkettige, verzweigte oder cyclische Alkylreste mit 1 bis 12 Kohlenstoffatomen gleich R1 oder O-R1 oder N(R1)₂
und wobei das thermoplastische Polyurethan insgesamt einen Gehalt an Titan von kleiner 100 ppm, bezogen auf das Gewicht von (1) aufweist. Bevorzugt weist der Kunststoff insgesamt einen Gehalt an Titan von kleiner 30 ppm, besonders bevorzugt zwischen 0 und 5 ppm, bezogen auf das Gewicht von (I), auf. Außerdem betrifft die Erfindung Verfahren zur Herstellung von Polyurethanen, insbesondere durch allgemein bekannte Umsetzung von (a) Isocyanaten mit (b) gegenüber Isocyanaten reaktiven Verbindungen, enthaltend sterisch gehindertes, verestertes Amin (I), wobei man dem Polyurethan während, beispielsweise durch Zugabe von (1) zu den Ausgangskomponenten zur Herstellung des Polyurethans, oder nach der Herstellung ein sterisch gehindertes verestertes Amin (I) mit einem Gehalt an Titan von kleiner 100 ppm, bevorzugt kleiner 30 ppm, besonders bevorzugt zwischen 0 und 5 ppm, bezogen auf das Gewicht von (I), zugibt und wobei der Kunststoff insgesamt einen Gehalt an Titan von kleiner 100 ppm, bezogen auf das Gewicht von (I), aufweist.

Kunststoffe, z.B. Polyolefine, Polyamide, Polyurethane, Polyacrylate, Polycarbonate, Polyester, Polyoxymethylene, Polystyrole und Styrolcopolymere finden in vielen Bereichen des täglichen Lebens Anwendung. Beispiele für diese Anwendungen sind Folien und Fasern, Automobilanwendungen im Innenraum, wie Polster und Bezugsstoffe, Armaturentafel oder Airbag, oder im Automobil-Außenbereich bei Reifen, Stoßfängern oder Schutzleisten, weiterhin Kabelummantelungen, Gehäuse, Schuhsohlen, Dispersionen, Lacke oder Farben.

Thermoplastische Kunststoffe sind Kunststoffe, die, wenn es in dem für den Werkstoff für Verarbeitung und Anwendung typischen Temperaturbereich wiederholt erwärmt und abgekühlt wird, thermoplastisch bleiben. Unter thermoplastisch wird die Eigenschaft eines Kunststoffes verstanden, in einem für ihn typischen Temperaturbereich wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein. Thermoplastische Kunststoffe sind in der Technik weit verbreitet und finden sich in der Form von Platten, Folien, Formkörpern, Flaschen, Ummantelungen Verpackungen usw.

In diesen unterschiedlichen Anwendungen sind die Kunststoffe den verschiedensten Anforderungen ausgesetzt. So müssen z.B. Kunststoffe, die im Motorraum eines Kraftfahrzeuges eingesetzt werden, hohen Temperaturen standhalten. Kunststofffolien oder Lacke hingegen, die dem Sonnenlicht ausgesetzt werden, unterliegen dem schädlichen Einfluss von UV-Licht. UV-Licht und thermische Belastung führen im allgemeinen zu einer Verfärbung des Produktes bzw. zu einer Reduktion des Eigenschaftsniveaus des Kunststoffes. Das wiederum beeinträchtigt das optische Erscheinen des Produktes. Zudem können die mechanischen Eigenschaften des Produktes empfindlich zurückgehen, so dass das Produkt nicht mehr in dem gewünschten Sinne genutzt werden kann.

Aufgrund ihres unterschiedlichen chemischen Aufbaus bringen Kunststoffe unterschiedliche Stabilitäten gegen UV-Licht und thermische Schädigung bzw. gegen Schädigung durch Umwelteinflüsse allgemein mit. Dennoch wäre es wünschenswert, den Anwendungsbereich aller Kunststoffe so breit wie möglich zu gestalten, d.h. die Stabilität des Kunststoffes durch umweltbedingte Schädigungen z.B. durch Wärme, Sonnenlicht oder UV-Licht zu vergrößern.

Es ist allgemeiner Stand der Technik, Kunststoffe mit Stabilisatoren zu schützen. Beispielweise können Kunststoffe durch eine Mischung aus einem Antioxidans (AO) und einem Hindererd Amine Light Stabilizer (HALS) oder durch eine Mischung aus einem UV-Absorber und einem phenolischen Antioxidans oder durch Mischung aus einem phenolischen Antioxidans, einem HALS und einem UV-Absorber gegen UV-Schädigung geschützt werden. Aufgrund der deutlichen Eigenschaftsverbesserungen bei Kunststoffen, die durch die Zugabe von stabilisierend wirkenden Additiven erreicht wurde, ist mittlerweile eine unübersehbar große Zahl verschiedener Stabilisatoren und Stabilisatorkombinationen kommerziell verfügbar. Bespiele für derartige Verbindungen sind gegeben in Plastics Additive Handbook, 5th Edition, H. Zweifel, ed., Hanser Publishers, München, 2001 ([1]), S.98-S136.

Ein Problem von Stabilisatoren ist ihr Migrationsverhalten, d.h. ihre Flüchtigkeit und ihre Tendenz zum Ausblühen, Ausbluten oder Auswaschen. So hat sich z.B. gezeigt, dass Stabilisatoren, deren Molmasse zu niedrig ist, aus dem Kunststoff verdampfen, der dann ungeschützt durch Umwelteinflüsse, wie hohe Temperatur oder Wärme geschädigt wird. Dies ist insbesondere dann ein relevantes Problem, wenn das OberflächeNolumenverhältnis sehr groß wird. Das Ausdampfen des Stabilisators, das sogenannte "Fogging", kann bei besonderen Anwendungen, z.B. im Automobilinnenbereich, dazu führen, dass Grenzwerte bei dem Anwender bezüglich der Gesamtmenge an flüchtigen Bestandteilen überschritten werden und der Kunststoff somit zurückgewiesen wird. Um Flüchtigkeit zu vermeiden, werden Stabilisatoren üblicher weise oligomerisiert, polymerisiert, oder an eine organische Ankergruppe angebunden, um die Molmasse zu erhöhen. Eine organische Ankergruppe ist in diesem Zusammenhang ein organischer Rest, dessen Aufgabe darin besteht, die Molmasse des Stabilisators zu erhöhen. An eine derartige Ankergruppe können ein oder mehrere Stabilisatoren angebunden werden.

Durch die Erhöhung der Molmasse kann aber die Verträglichkeit des Stabilisators, mit dem Polymer derart abnehmen, dass es zu Ausblühungen, d.h. zur Bildung von Belägen des Stabilisators auf der Oberfläche des Produktes, kommt. Diese Beläge führen zu einer optischen Beeinträchtigung des Produktes und können deshalb zu Reklamationen führen. Zudem wird durch das Ausblühen die Konzentration des Stabilisators und damit die Wirksamkeit der Stabilisatormischung gesenkt. Besonders bei dicken Werkstücken mit einem kleinen Obertläche/Volumenverhältnis ist Ausblühen ein relevantes Problem.

Die Unverträglichkeit eines Stabilisators mit einem Polymer und damit die Gefahr des Ausblühens des Stabilisators ist stark abhängig von dem Paar Stabilisator/Polymer und nicht vorhersagbar. Mitunter kann ein Stabilisator, der in dem einen Polymer problemlos eingesetzt werden kann, in dem anderen Polymer zu massiven Ausblühungen führen. Dies führt nicht nur dazu, dass ein Hersteller von verschiedenen Kunststoffen eine große Anzahl von verschiedenen Stabilisatoren mit mitunter gleichen Wirkstoffgruppen vorhalten muss, auch die Tests zum Auffinden der optimalen Stabilisatoren werden sehr aufwendig, da für jedes Polymer erneut auch die Migrationseigenschaften untersucht werden müssen.

Polyurethan, insbesondere thermoplastisches Polyurethan (nachstehend als TPU bezeichnet) ist ein Elastomer, der in vielen Anwendungen Verwendung findet, z.B. Schuhapplikationen, Folien, Skistiefel, Schläuche. Instrumententafeln, Dichtungen, Absatzflecken, Zier- und Designelemente, Skiabdeckfolien, Schutzfolien für Verkehrsschilder usw. In vielen dieser Anwendungen ist das TPU direkt oder indirekt dem UV-Licht ausgesetzt. Aus diesem Grund ist es Stand der Technik, das TPU durch UV-Stabilisatoren oder Abmischungen von UV-Stabilisatoren zu schützen. Beispielsweise können Antioxidantien, insbesondere phenolische Antioxidantien eingesetzt werden. Beispiele für phenolische Antioxidantien finden sich in Plastics Additive Handbook, 5th edition, H. Zweifel, ed, Hanser Publishers, München, 2001 ([1]), S.98-107 und S 116-S. 121. Des weiteren können auch UV-Absorber zum Schutz des TPU Verwendung finden. UV-Absorber sind Moleküle, die energiereiches UV-Licht absorbieren und Energie dissipieren. Gängige UV-Absorber, welche in der Technik Verwendung finden, gehören z.B. zur Gruppe der Zimtsäureester, der Diphenylcyanacrylate, Diarylbutadiene sowie der Benzotriazole. Besonders geeignet sind die Benzotriazole.

Eine weitere Klasse der UV-Stabilisatoren sind die sterisch gehinderten Amine, auch bekannt als Hindered Amine Light Stabilisatoren (HALS). Die Aktivität der HALS beruht auf ihrer Fähigkeit, Nitroxylradikale zu bilden die in den Mechanismus der Oxidation von Polymeren eingreift. HALS gelten als effiziente UV-Stabilisatoren für die meisten Polymere und so auch für Polyurethane. Beispiele für Hindered Amine Light Stabilizer sind gegeben in [1], S.123-136. Als besonders geeignet für Polyurethan ist das Tinuvin® 622 (Ciba Specialty Chemicals, Basel, Schweiz) aufgrund seiner geringen Flüchtigkeit und seiner guten Verträglichkeit mit dem TPU.

Im allgemeinen werden die oben beschriebenen Stabilisatoren in Abmischungen eingesetzt. So können z.B. UV-Absorber mit phenolischen Stabilisatoren kombiniert werden oder UV-Absorber mit HALS-Verbindungen, HALS- Verbindungen mit phenolischen Stabilisatoren und auch Kombinationen aus HALS, UV-Absorber und phenolischen Stabilisatoren.
Üblicherweise werden thermoplastische Polyurethane durch eine Mischung aus Antioxidans, UV-Absorber, und HALS geschützt. So empfiehlt die CIBA Speciality Chemicals die Verwendung von Tinuvin® 622 mit ihren UV Absorbern der Tinuvin® Reihe [Tinuvin® 622, Technical Data Sheet, Nov-99].

US 5824738 beschreibt die Verwendung einer solchen Mischung aus Antioxidant, UV-Absorber und HALS zur Stabilisierung von Thermoplastischem Polyurethan. Als besonders geeignet hat sich eine Mischung aus phenolischem Stabilisator, Benzotriazol und Tinuvin® 622 herausgestellt.

Allerdings hat sich gezeigt, dass besonders Stabilisatorengemische zur UV-Stabilisierung, welche ein Benzotriazol als UV-Absorber enthalten, dazu neigen, die zu stabilisierenden Polyurethane schon vor der Belichtung zu vergilben. Diese Gelbfärbung, so gering sie auch sein mag, ist unerwünscht und führt zu einer Zurückweisung des Produktes.

DE 10148702 A1 beschreibt eine Stabilisatormischung enthaltend Antioxidant, UV-Absorber, HALS und zusätzlich ein Phosphit, um die Anfangsfarbe des TPU so niedrig wie möglich zu halten. Beispiele für Phosphite finden sich in [1], S.109-112. Allerdings wirken Phosphite hydrolysierend, insbesondere bei Polyester TPU. Diese Hydrolyse führt zu einer Verschlechterung der mechanischen Eigenschaften und damit zu einer Verschlechterung des Produktes.

Die Aufgabe der Erfindung bestand deshalb darin, einen Kunststoff, besonders bevorzugt ein Polyurethan, insbesondere ein TPU zu entwickeln, welches eine möglichst geringe Eigenfarbe aufweist und zudem hervorragend gegen äußere Einflüsse stabilisiert ist, insbesondere gegen UV-Strahlung. Besonders bevorzugt sollte das Polyurethan außerdem eine hohe Stabilität gegen Hydrolyse besitzen.

Diese Aufgabe konnte durch das eingangs dargestellte Polyurethan gelöst werden.

Überraschenderweise hat sich gezeigt, dass verestertes sterisch gehindertes Amin, welches von Resten titanhaltiger Katalysatoren befreit wurde, zu einer deutlich geringeren Vergilbung des Polyurethans führt. Befreit bedeutet in diesem Zusammenhang, das Titankatalysatorreste deaktiviert, komplexiert, gefällt, gefiltert, absorbiert oder anderweitig unschädlich gemacht wurden, oder dass bei der Veresterung des sterisch gehinderten Amins kein Titan als Katalysator eingesetzt wurde.

Bei dem erfindungsgemäßen, sterisch gehinderten und veresterten Amin handelt es sich bevorzugt um Tinuvin® 622 (CAS-No: 65447-77-0), das in dem folgenden Schema mit 3 gekennzeichnet ist. Bevorzugt handelt es sich somit um ein Kondensationsprodukt auf der Basis von einem sterisch gehinderten Amin enthaltend 2 Hydroxygruppen (in dem Schema mit **1** gekennzeichnet), und Butandisäure bzw. einem Butandisäurederivat (mit **2** gekennzeichnet). Kondensationen erfolgen im allgemeinen unter Abspaltung einer OH-haltigen Verbindung. Dies kann Wasser, oder aber ein Aklkohol, bevorzugt ein niedermolekularer Alkohol wie Methanol oder Ethanol. Durch Entfernung der OH-Komponente aus dem Gleichgewicht, z.B. durch Destillation, kann die Reaktion hin zum Polykondensationsprodukt getrieben werden. Um die Reaktion zu beschleunigen, werden Katalysatoren wie Zinn-oder Titankatalysatoren eingesetzt. Besonders reaktiv sind die Titankatalysatoren. Die Hydroxygruppe in 4-Position des Rings von 1 ist eine sekundäre OH-Gruppe. Sekundäre OH-Gruppen sind bei Polykondensationsreaktionen reaktionsträger als primäre OH-Gruppen. Daher werden häufig hohe Konzentrationen an Katalysatoren, insbesondere an Titankatalysatoren eingesetzt. Diese Katalysatoren werden im allgemeinen nach der Reaktion nicht mehr abfiltriert und verbleiben somit im Produkt. So enthält das veresterte sterisch gehinderte Amin 3 verschiedener Hersteller zwischen 120 ppm und 200 ppm Titan. 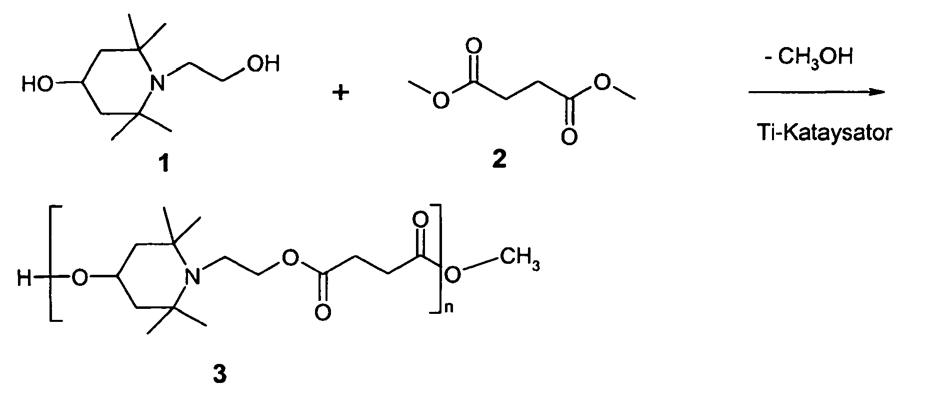 Überraschenderweise hat sich gezeigt, dass dieses Titan verantwortlich für die Verfärbung eines UV-stabilisierten TPU bei der Synthese ist. Deshalb wird erfindungsgemäß ein sterisch gehindertes verestertes Amin, insbesondere das der oben dargestellten Formel **3**, in dem erfindungsgemäßen Polyurethan, insbesondere dem thermoplastischen Polyurethan eingesetzt mit einem Titangehalt < 100 ppm, bevorzugt < 30 ppm, insbesondere < 5 ppm, jeweils bezogen auf das Gewicht des sterisch gehinderten veresterten Amins.
Überraschenderweise hat sich auch gezeigt, dass die Hydrolyse des TPU herabgesetzt wird, wenn ein erfingungsgemäßes, sterisch gehindertes verestertes Amin verwendet wird.

Erfindungsgemäß ist somit ein TPU, dass als (1) die folgende Verbindung enthält: 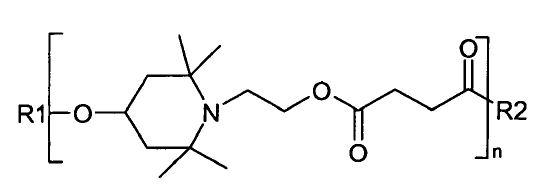 mit den folgenden Bedeutungen für n, R1 und R2:
- n: ist eine ganze Zahl von 1 bis 100, bevorzugt ist n = 3 bis 50, insbesondere n = 8 bis 14,
- R1 =: ein Wasserstoffatom, geradkettige, verzweigte oder cyclische Alkylreste mit 1 bis 12 Kohlenstoffatomen, bevorzugt Wasserstoffatom,
- R2 =: ein Wasserstoffatom, geradkettige, verzweigte oder cyclische Alkylreste mit 1 bis 12 Kohlenstoffatomen, gleich R1 oder O-R1 oder N(R1)₂, bevorzugt -O-CH₃.

Der niedrige Gehalt an Titan kann bevorzugt derart erreicht werden, dass man das sterisch gehinderte, veresterte Amin in Gegenwart von Titan-Katalysatoren verestert, d.h. herstellt und anschließend den Titan-Katalysator z.B. durch Filtration entfernt. Hierzu kann z.B. das Produkt zur Senkung der Viskosität in ein Lösemittel aufgenommen werden, in Gegenwart von wenig Wasser, z.B. 0,01 bis 10 Gew.-%, bevorzugt 0,1 bis 3 Gew.-% insbesondere 0,1 bis 1 Gew.-%, gerührt, und dann filtriert werden. Bevorzugt wird zur Filtration eine Druckfiltration verwendet.

Bevorzugt enthält das erfindungsgemäße Polyurethan zusätzlich zu (I) einen phenolischen Stabilisator (II).

Als phenolische Stabilisatoren kommen allgemein bekannte Verbindungen in Frage, die insbesondere als Antioxidantien wirken. In einer bevorzugten Ausführungsform weisen die Antioxidantien (II), insbesondere die phenolischen Antioxidantien (II), eine Molmasse von größer 350 g/mol, besonders bevorzugt von größer 700 g/mol und einer maximalen Molmasse < 10000 g/mol bevorzugt < 3000 g/mol, insbesondere < 1500 g/mol auf. Ferner besitzen sie bevorzugt einen Schmelzpunkt von kleiner 180°C. Weiterhin werden bevorzugt Antioxidantien verwendet, die amorph oder flüssig sind. Ebenfalls können als Komponente (II) auch Gemische von zwei oder mehr Antioxidantien verwendet werden.

Die vorstehend genannten Randbedingungen bezüglich Molmasse und Schmelzpunkt stellen sicher, dass das Antioxidans sich auch bei großen Obertläche/Volumen Verhältnissen nicht verflüchtigt und dass bei der Synthese das Antioxidans gleichmäßig und homogen in das TPU eingearbeitet werden kann. Beispiele für geeignete phenolische Antioxidantien sind Moleküle, welche die folgende Struktur 1 als Wirkstoffgruppe enthalten: 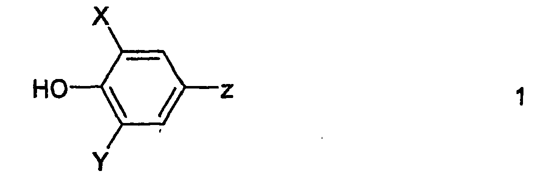 in der
- X und Y: unabhängig voneinander ein Wasserstoffatom, geradkettige, verzweigte oder cyclische Alkylreste mit 1 bis 12 Kohlenstoffatomen bedeuten und
- Z: eine kovalente Bindung ist, über die die Wirkstoffgruppe mit dem restlichen Molekül des Antioxidans (i) verbunden ist.

Bevorzugt eingesetzt als phenolisches Antioxidans (II) werden solche Verbindungen, die den folgenden Rest 2 enthalten: 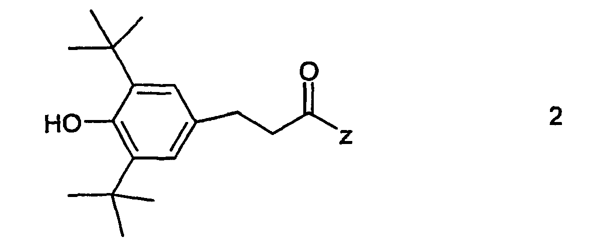 wobei Z wie vorstehend zu 1 definiert ist.

Beispiele für bevorzugte phenolische Antioxidantien, welche die Wirkstoffgruppe 1 enthalten, sind Triethylenglycol-bis(3-(5-tert.butyl-4-hydroxy-m-tolyl)-propionat) (Irganox^{®} 245, Ciba Spezialitätenchemie AG), Hexamethylen-bis(3-(3,5-di-tert-butyl-4-hydroxyphenyl)propionat) (Irganox^{®} 259), Pentaerythrityl-tetrakis (3-(3,5-bis(1,1-dimethylethyl)-4-hydroxyphenyl)-propionate) (Irganox^{®} 1010), Octadecyl-3-(3,5-di-tert.butyl-4-hydroxyphenyl)-propionat (Irganox^{®} 1076), N,N'-Hexamethylen-bis-(3,5-di-tert.butyl-4-hydroxy-hydrozimtsäureamid) (Irganox^{®} 1098), und das Irganox® 1135.

Besonders bevorzugt sind Antioxidantien, die sich durch die allgemeinen Formeln 3A und 3B beschreiben lassen.

Besonders bevorzugt enthält das Polyurethan als phenolischen Stabilisator (II) eine der folgenden Verbindungen 3A und 3B: 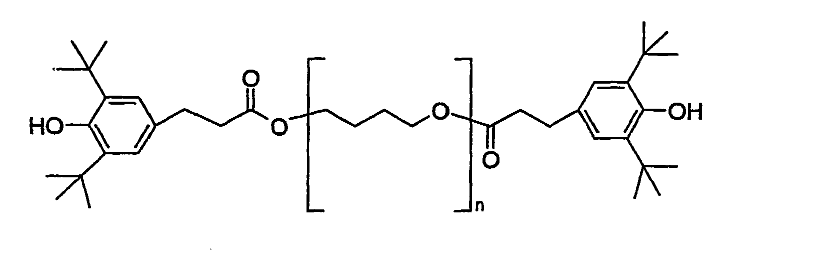 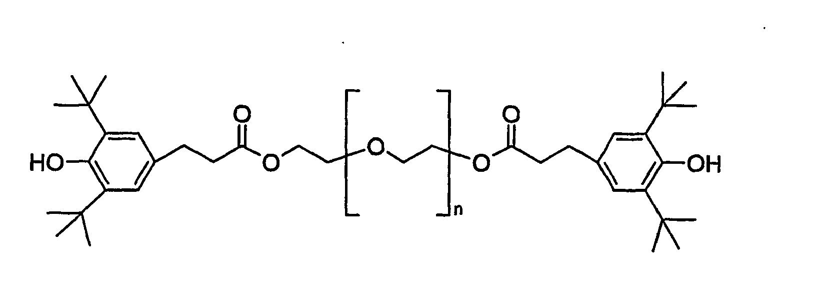 jeweils mit den folgenden Bedeutungen für n: 1-30. bevorzugt 1, 2, 3, 4, 5, 6, 7, 8, 9, 10, 11, 12, 13, 14, 15, 16, 17, 18, 19, 20, 21, 22, 23, 24, 25, besonders bevorzugt 2, 3, 4, 5, 6, 7, 8 oder 9, insbesondere 3, 4 oder 5.

Besonders bevorzugt sind Mischungen enthaltend Verbindungen der Formel 3A und/oder 3B, die sich in dem jeweiligen n unterscheiden, somit ein unterschiedliches Molekulargewicht aufweisen.

Die bevorzugten Antioxidantien 3A und 3B stellen dementsprechend bevorzugt Mischungen aus verschiedenen Verbindungen dar, die sich nur in der Größe von n unterscheiden, nachfolgend als Antioxidantienmischung bezeichnet. Der Anteil der Moleküle n₁, n₂,n₃ bis nₘ wird dabei bevorzugt so gewählt, dass die zahlenmittlere Molmasse der Antioxidantienmischung der als vorteilhaft erkannten Molmasse entspricht. Bevorzugt wird der Anteil der Moleküle n₁, n₂, n₃ bis nₘ so gewählt, dass die zahlenmittlere Molmasse des Antioxidantienmischung 3A und/oder 3B größer 350 g/mol, besonders bevorzugt > 700 g/mol und < 10000 g/mol bevorzugt < 3000 g/mol, insbesondere < 1000 g/mol beträgt.

In einer weiteren bevorzugten Ausführungsform werden Antioxidantienmischungen verwendet, deren Polydispersität P_{d} größer 1 ist, d.h, ihre zahlenmittlere Molmasse istkleiner als ihre gewichtsmittlere Molmasse ist. Dies ist beispielsweise dann erfüllt, wenn das Antioxidans aus einer Mischung aus verschiedenen Molekülen der Struktur 3A oder 3B mit unterschiedlichen n besteht.

Es kann von Vorteil sein, wenn nicht ein einzelnes phenolisches Antioxidans verwendet wird sondern Mischungen von phenolischen Antioxidantien zur Stabilisierung eingesetzt werden. Prinzipiell können alle phenolischen Antioxidantien, die den oben beschrieben Bedingungen zu Molmasse und Schmelzpunkt entsprechen, für derartige Mischungen eingesetzt werden.

Besonders bevorzugt sind Mischungen, die Irganox^{®} 1010 enthalten und/oder solche Mischungen, die phenolische Antioxidantien gemäß den allgemeinen Formeln 3A und 3B enthalten.

Bevorzugt enthalten die erfindungsgemäßen Polyurethane zusätzlich zu (I) noch mindestens ein Benzotriazol (III), das als UV-A Absorber dient. UV-A Absorber sind solche Moleküle, die Licht mit einer Wellenlänge im UV-A Spektrum absorbieren und in eine für den Kunststoff nichtschädliche Form, z.B. Wärme, umwandeln.

Beispiele für kommerziell erhältliche und bevorzugte Benzotriazole sindTinuvin^{®}P (CAS reg.Nr. 2440-22-4), Tinuvin^{®} 329 (CAS Reg.Nr. 3147-75-9), Tinuvin^{®} 326 (CAS.Reg.Nr. 3896-11-5), Tinuvin ^{®} 320 (CAS Reg.Nr. 3846-71-7), Tinuvin^{®} 571 (CAS.Reg.Nr. 23328-53-2), Tinuvin^{®} 328 (CAS.Reg.Nr. 25973-55-1), Tinuvin^{®} 350 (CAS.Reg.Nr. 36437-37-3), Tinuvin^{®} 327 (CAS.Reg.Nr. 3864-99-1), Tinuvin^{®} 234 (CAS.Reg.Nr. 70321-86-7), Tinuvin^{®} 360 (CAS.Reg.Nr.103597-45-1), Tinuvin^{®} 840 (CAS.Reg.Nr. 84268-08-6), C7-9 verzweigter und linearer Alkylester der 4-hydroxy-3-(2H-benzotriazol-2-yl)-5-(1,1-di-methylethyl)-phenylpropansäure (CAS No. 127519-17-9, Tinuvin^{®} 384, Tinuvin^{®} 213 (Mischung aus 3 Substanzen mit CAS NO. 104810-48-2, 10481047-1, 25322-68-3). Tinuvin^{®} ist eine Marke der CIBA Specialty Chemicals, Basel, Schweiz.

Besonders bevorzugt sind Tinuvin^{®} 328, Tinuvin^{®} 329, Tinuvin^{®} 234, Tinuvin^{®} 213, Tinuvin^{®} 571 und Tinuvin^{®} 384. Besonders bevorzugt sind Tinuvin 328^{®}, Tinuvin^{®} 571, Tinuvin^{®} 213 und Tinuvin^{®} 384, insbesondere C7-9 verzweigter und linearer Alkylester der 4-hydroxy-3-(2H-benzotriazol-2-yl)-5-(1, 1 -di-methylethyl)- phenylpropansäure (CAS No. 127519-17-9, Tinuvin^{®} 384 und Tinuvin^{®} 328.

Als Komponente (III) des erfindungsgemäßen Stabilisatorengemisches können auch Gemische von zwei oder mehr der genannten UV-Absorber (III) eingesetzt werden.

Verfahren zur Herstellung von Polyurethanen, insbesondere von TPUs, sind allgemein bekannt. Beispielsweise können Polyurethane, bevorzugt TPUs, durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4. Pentamethylen-düsocyanat-1,5, Butylen-diisocyanat-1,4, 1-Isocyanato-3,3,5-trimethyl-5-isocyanatomethyl-cyclohexan (isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-düsocyanat und/oder 4,4'-, 2,4'- und 2,2'-Dicyclohexylmethandiisocyanat, 2,2'-, 2,4'- und/oder 4,4`-Diphenylmethandüsocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2
c) Als Kettenverlängerungsmittel (c) können allgemein bekannte aliphatische, raliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemisch weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide. In einer weiteren Ausführungsform kann das TPU eine Phosphorverbindung enthalten. In einer bevorzugten Ausführungsform werden als Phosphorverbindungen Organophosphorverbindungen des trivalenten Phosphors, wie beispielsweise Phosphite und Phosphonite, verwendet. Beispiele für geeignete Phosphorverbindungen sind, Triphenyl phosphit, Diphenylalkylphosphit, Phenyldialkylphosphit, Tris-(nonylphenyl) phosphit, Trilaurylphosphit, Trioctadecylphosphit, Di-stearyl-pentaerythritol diphosphit, Tris-(2,4-di-tert-butylphenyl) phosphit, Di-isodecylpentaerythritol diphosphit, Di-(2,4-di-tert-butylphenyl)pentaerythritol diphosphit, Tristearyl-sorbitol triphosphit, Tetrakis-(2,4-di-tert-butylphenyl) 4,4'-diphenylylenediphosphonit, Trisisodecylphosphit, Düsodecylphenylphosphit und Diphenylisodecylphosphit oder Gemische daraus.

Die Phosphorverbindungen sind insbesondere dann geeignet, wenn sie schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane die Phosphorverbindungen geeignet, die besonders schwer hydrolysieren. Beispiele für solche Phosphorverbindungen sind Di-polypropylenglykolphenylphosphit, Tri-isodecylphosphit, Triphenylmonodecylphosphit, Trisisononylphosphit, Tris-(2,4-di-tert-butylphenyl) phosphit, Tetrakis-(2,4-di-tert-butylphenyl) 4,4'-diphenylylenediphosphonit und Di-(2,4-di-tert-butylphenyl)-pentaerythritol diphosphit oder Gemische davon.

Neben den genannten Komponenten a) und b) und gegebenenfalls c), d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäß hergestellten TPUs, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion.

Der Stabilisator (I), d.h. das sterisch gehinderte, veresterte Amin, ist bevorzugt in einer Konzentration zwischen 0,1 und 5 Gew.-%, besonders bevorzugt zwischen 0,1 bis 3 Gew.-%, insbesondere 0,1 bis 1 Gew.-%, bezogen auf das Gesamtgewicht des Polyurethans, in dem Polyurethan enthalten.

Ist das zu stabilisierende TPU ein Polyether-TPU mit einer Shorehärte kleiner Shore 54 D, wird das Antioxidans (I) üblicherweise in Konzentrationen von 0,1 bis 5 Gewichtsprozent (Gew.-%), bevorzugt 0,1 bis 1 Gew.-%, besonders bevorzugt 0,5 bis 1 Gew.-%, bezogen auf das Gesamtgewicht des TPU eingesetzt.

Ist das zu stabilisierende TPU ein Polyester-TPU oder ein Polyether-TPU mit einer Shorehärte größer oder gleich Shore 54 D, wird das Antioxidans (I) üblicherweise in Konzentrationen von 0,1 bis 5 Gew.-%, bevorzugt 0,1 bis 1 Gew.-%, besonders bevorzugt 0,15 bis 0,5 Gew.-%, bezogen auf das Gesamtgewicht des TPU eingesetzt.

Der Stabilisator (II), d.h. der phenolische Stabilisator, ist bevorzugt in einer Konzentration zwischen 0,1 und 5 Gew.-%, bezogen auf das Gesamtgewicht des Polyurethans, in dem Polyurethan enthalten.

Der UV-Absorber (III), d.h. das Benzotriazol, ist bevorzugt in einer Konzentration zwischen 0,01 und 2 Gew.-%, besonders bevorzugt zwischen 0,05 bis 1 Gew.-%, insbesondere 0,15 bis 0,25 Gew.-%, bezogen auf das Gesamtgewicht des Polyurethans, in dem Polyurethan enthalten.

Unter dem Ausdruck "Gesamtgewicht des Polyurethans" ist des Gewicht des Polyurethan inklusive aller gegebenenfalls in dem Polyurethan vorliegenden Katalysatoren, Hilfsstoffe, Füllstoffe, Stabilisatoren etc. zu verstehen, die nicht in das eigentliche Polyurethanpolymer eingebaut sind.

Ist das TPU ein Polyester-TPU, so wird bevorzugt zusätzlich ein Hydrolyseschutzmittel zugegeben. Bevorzugte Hydrolyseschutzmittel sind Carbodiimde (IV), beispielsweise polymere und niedermolekulare Carbodiimide. Hydrolyseschutzmittel werden im allgemeinen in einer Konzentration von 0,05 bis 5 Gew.-%, bevorzugt 0,2 bis 2 Gew.-%, insbesondere 0,5 bis 1 Gew.-%, bezogen auf das Gesamtgewicht des TPU, eingesetzt.

Bevorzugt enthalten die Polyurethane, insbesondere die thermoplastischen Polyurethane, zusätzlich zu den erfindungsgemäßen Stabilisatoren (I) somit auch die Stabilisatoren (II) und/oder (III), besonders bevorzugt (II) und (III).

Zur Herstellung der erfindungsgemäßen Polyurethane, enthaltend die Komponente (I) sowie bevorzugt (II) oder (III), besonders bevorzugt (II) und (III) sowie gegebenenfalls (IV), sind verschiedene Verfahren möglich.

Die drei Komponenten (I) bis (III) des Stabilisatorengemisches können vor der Synthese des Polyurethans zu den Rohstoffen zudosiert werden, bevorzugt wenn die Komponenten (I) bis (III) mischbar mit den Ausgangsstoffen des Polyurethans sind. Beispielsweise können die Komponenten (I) bis (III) der Polyolkomponente (b) oder der Isocyanatkomponente (a) zugegeben werden. Ebenfalls ist es möglich, dass unterschiedliche Stabilisatorkomponenten unterschiedlichen Komponenten zur Herstellung des Polyurethans zugegeben werden. Beispielsweise können die Komponenten (I) bis (II) der Polyolkomponente (b) zugesetzt werden und die Stabilisatorenkomponente (III) der Isocyanatkomponente (a).

Die Stabilisatorenkomponenten (I) bis (III) können auch während der Synthese der Polyurethane, z.B, des TPUs, zudosiert werden. Beispielsweise können die drei Stabilisatorenkomponenten (I), (II), und (III) einzeln zu den Eduktströmen des Reaktors, bzw. wenn das TPU über ein Reaktionsextrusionsverfahren hergestellt wird, direkt in den Extruder dosiert werden. Die Stabilisatorenkomponenten können auch vorgemischt und dann zum TPU zudosiert werden.

Des weiteren können die drei Komponenten (I) bis (III) des erfindungsgemäßen Stabilisatorengemisches erst bei der Verarbeitung, z.B. bei einem Extrusions- oder Spritzgussprozess zum TPU gegeben werden. Auch hier ist es besonders vorteilhaft, wenn die vier Wirkstoffkomponenten vor der Dosierung gemischt und dann als eine fertige Vormischung zudosiert werden können.

Schließlich können die vier Komponenten der Stabilisierung auch in hoher Konzentration in ein TPU eingearbeitet werden. Dieses Konzentrat wird dann granuliert und als Additiv während der Verarbeitung eines nichtstabilisierten TPU zudosiert.

Die erfindungsgemäßen Polyurethane, insbesondere thermoplastischen Polyurethane werden bevorzugt zur Herstellung von Formgegenständen, bevorzugt von Folien, Schuhsohlen, Rollen, Fasern, Verkleidungen in Automobilen, Wischerblätter, Schläuchen, Kabelstecker, Faltenbälge, Schleppkabel, Kabelummantelungen, Dichtungen, Riemen oder Dämpfungselemente verwendet, wobei diese die eingangs dargestellten Vorteile aufweisen.

### Beispiele

### Beispiel 1:

Dieses Beispiel beschreibt den durchschnittlichen Titangehalt der folgenden Verbindung von unterschiedlichen Herstellern:

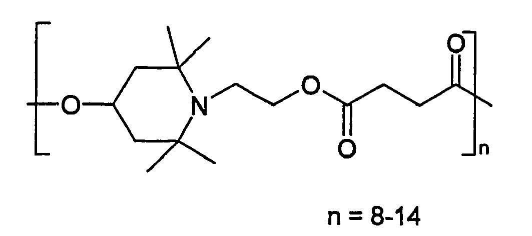

Der Titangehalt von Tinuvin^{®} 622 LD und den chemisch identischen Produkten Chisorb^{®} 622 LD und Lowilite^{®} 62 wurde mittels Atomabsorptionsspektroskopie bestimmt.

| Handelsname | Hersteller | Titangehalt in ppm |
|---|---|---|
| Tinuvin® 622 LD | CIBA | 110 |
| Chisorh® 622 LD | Double Bond Chemical | 138 |
| Lowilite® 62 | Great Lakes | 120 |

Wie aus Tabelle 1 zu entnehmen ist, verwenden alle Hersteller zur Synthese einen Titankatalysator, der mit hoher Konzentration im Produkt verbleibt.

### Beispiel 2: Verfahren zur Aufreinigung von Tinuvin^{®} 622

100g Tinuvin^{®} 622 wurden in 300 g THF gelöst. Anschließend wurde unter Rühren 0,5 Gew.-% Wasser, bezogen auf die Gesamtmenge, zugegeben und 1 h gerührt. Danach wurde die Lösung über einen Druckfilter (Seitz- Einschichtenfilter EDF 14-2) mit einer Seitz Tiefenfilterscheibe T 120 bei einem Druck von 1,5-2 bar filtriert. Die Lösung wird einrotiert und das gereinigte Tinuvin^{®} 622 wird bei 10 mbar 6 h bei 40°C getrocknet.
Titangehalt vor Aufreinigung: 110 ppm; Titangehalt nach Aufreinigung: 2,3 ppm

### Beispiel 3: Herstellung eines Polyester-TPU

In einen 2-I-Weißblecheimer wurden 1000 g eines Polyesterols (LP 1010, BASF Aktiengesellschaft) auf 80°C aufgeheizt. Anschließend wurden unter Rühren verschiedenen Stabilisatoren zugegeben. Beispiele für Art und Menge der Stabilisatoren sind in Tabelle 2 zusammengefasst. Danach wurden 88 g 1,4-Butandiol und 8 g Elastostab^{®} H 01 (Elastogran GmbH) zugegeben. Nach anschließender Erwärmung der Lösung auf 75°C wurden 500 g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hat eine Shorehärte von Shore 85A.

### Beispiel 4

Entsprechend Beispiel 3 wurden Polyester-TPU gegossen, die mit einer UV-Stabilisierungsmischung stabilisiert wurden. Tabelle 2 gibt Auskunft über die Menge an eingesetzten Stabilisatoren.

**Tabelle 2: Konzentration der Stabilisatoren in den Polyester-TPU's, mit unterschiedlichen HALS-Produkten (Irganox ist ein Handelsname der CIBA Specialty Chemistry)**

| Probe | Stabilisator 1 | Stabilisator 2 | Stabilisator 3 | Stabilisator 4 |
|---|---|---|---|---|
| | (0,25 Gew.-%) | (0,25 Gew.-%) | (0,15 Gew.-%) | (0,25 Gew.-%) |
| 4-a | Irganox^{®} 1010 | Irganox^{®} 1098 | Tinuvin^{®} 571 | Tinuvin^{®} 622 |
| 4-b | Irganox^{®} 1010 | Irganox^{®} 1098 | Tinuvin^{®} 571 | Tinuvin^{®} 765 |
| 4-c | Irganox^{®} 1010 | Irganox^{®} 1098 | Tinuvin^{®} 571 | ADK-STAB LA62 |

Die aus den Versuchen 4b+4c hergestellten 2-mm-Spritzplatten wiesen nach 5 Wochen Lagerdauer bei Raumtemperatur einen Schmierfilm auf. Die Spritzplatten des Versuches 4a waren nach der Lagerdauer von 5 Wochen bei Raumtemperatur hingegen belagfrei.

### Beispiel 5: Herstellung eines Ether-TPU

In einen 2-I-Weißblecheimer wurden 1000 g eines Polyetherols (PTHF1000, BASF Aktiengesellschaft) auf 80°C aufgeheizt. Anschließend wurden unter Rühren die verschiedenen Stabilisatoren zugegeben. Art und Menge der Stabilisatoren sind in Tabelle 3 zusammengefasst. Danach wurden 155 g 1,4-Butandiol zugegeben. Nach anschließender Erwärmung der Lösung auf 75°C wurden 830 g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2-mm-Spritzplatten verarbeitet. Das Produkt hat eine Shorehärte von Shore 95A.

### Beispiel 6

Ein Polyether-TPU wie beschrieben in Beispiel 5 und ein Polyester-TPU wie beschrieben in Beispiel 3 wurden hergestellt und mit Stabilisatoren (Antioxidant = Irganox^{®} 1125, UV-Absorber = Tinuvin^{®} 571) entsprechend Tabelle 3 stabilisiert. Nach Verrbeitung zu Spritzplatten wurde der Yellowness Index der Proben analysiert. Es zeigte sich, dass die Proben enthaltend ein Tinuvin^{®} 622, welches nach Reinigung entprechend Beispiel 2 einen geringen Titangehalt hatte, eine deutlich bessere Anfangsfarbe aufwiesen, als die Proben enthaltend das kommerzielle, nicht gereinigte Produkt.

**Tabelle 3:**

| Probe | TPU | Anti-oxidant | Absorber | Tinuvin^{®} 622 | Titangehalt Tinuvin^{®} 622 | Yellowness Index |
|---|---|---|---|---|---|---|
| 6-1 | Ether | 1% | 0,5 % | 0,5 % | 111 ppm | 5,5 |
| 6-2 | Ether | 1 % | 0,5 % | 0,5 % | 2,3 ppm | 3,5 |
| 6-3 | Ester | 0,5 % | 0,5 % | 0,5 % | 111 ppm | 6,4 |
| 6-4 | Ester | 0,5 % | 0,5 % | 0,5 % | 2,3 ppm | 5,5 |

## Patentansprüche

1. Thermoplastisches Polyurethan enthaltend sterisch gehindertes, verestertes Amin (I), das einen Gehalt an Titan von kleiner 100 ppm, bezogen auf das Gewicht von (I), aufweist, wobei als (I) die folgende Verbindung in dem Polyurethan vorliegt: 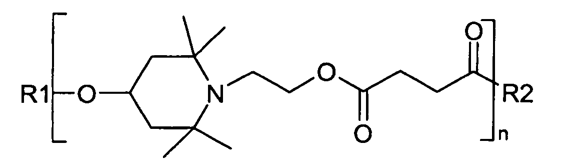 mit den folgenden Bedeutungen für n, R1 und R2:
n: eine ganze Zahl von 1 bis 100,
R1: ein Wasserstoffatom, geradkettige, verzweigte oder cyclische Alkylreste mit 1 bis 12 Kohlenstoffatomen,
R2: ein Wasserstoffatom, geradkettige, verzweigte oder cyclische Alkylreste mit 1 bis 12 Kohlenstoffatomen gleich R1 oder O-R1 oder N(R1)₂
und wobei das thermoplastische Polyurethan insgesamt einen Gehalt an Titan von kleiner 100 ppm, bezogen auf das Gewicht von (I) aufweist.

2. Thermoplastisches Polyurethan gemäß Anspruch 1, **dadurch gekennzeichnet, dass** das sterisch gehinderte, veresterte Amin in einer Konzentration zwischen 0,1 und 5 Gew.-%, bezogen auf das Gesamtgewicht des thermoplastischen Polyurethans, in dem thermoplastischen Polyurethan enthalten ist.

3. Thermoplastisches Polyurethan gemäß Anspruch 1, **dadurch gekennzeichnet, dass** der Kunststoff einen phenolischen Stabilisator (II) enthält.

4. Thermoplastisches Polyurethan gemäß Anspruch 3, **dadurch gekennzeichnet, dass** der Kunststoff als phenolischen Stabilisator (II) mindestens eine der folgenden Verbindungen enthält: 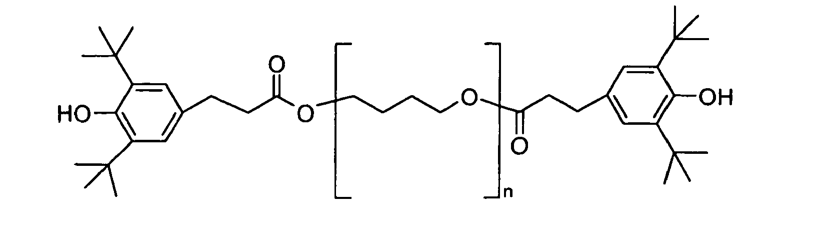 und/oder 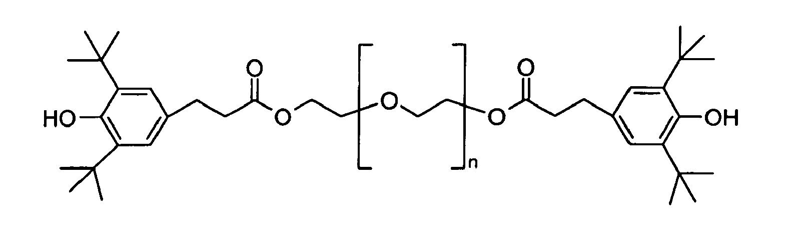 jeweils mit der folgenden Bedeutung für n: 1 bis 30.

5. Thermoplastisches Polyurethan gemäß Anspruch 3, **dadurch gekennzeichnet, dass** der phenolische Stabilisator (II) in einer Konzentration zwischen 0,1 Gew.-% und 5 Gew.-%, bezogen auf das Gesamtgewicht des Polyurethans, in dem Polyurethan enthaltend ist.

6. Thermoplastisches Polyurethan gemäß Anspruch 1 oder 3, **dadurch gekennzeichnet, dass** das Polyurethan Benzotriazol (III) enthält.

7. Thermoplastisches Polyurethan gemäß Anspruch 6, **dadurch gekennzeichnet, dass** der Kunststoff als (III) mindestens eine Verbindung aus der folgenden Gruppe enthält: Tinuvin^{®} P (CAS reg.Nr. 2440-22-4), Tinuvin^{®} 329 (CAS Reg.Nr. 3147-75-9), Tinuvin^{®} 326 (CAS.Reg.Nr. 3896-11-5), Tinuvin^{®} 320 (CAS Reg.Nr. 3846-71-7), Tinuvin^{®} 571 (CAS.Reg.Nr. 23328-53-2), Tinuvin^{®} 328 (CAS.Reg.Nr. 25973-55-1), Tinuvin^{®} 350 (CAS.Reg.Nr. 36437-37-3, Tinuvin^{®} 327 (CAS.Reg.Nr. 3864-99-1), Tinuvin^{®} 234 (CAS.Reg.Nr. 70321-86-7), Tinuvin^{®} 360 (CAS.Reg.Nr. 103597-45-1), Tinuvin^{®} 840 (CAS.Reg.Nr. 84268-08-6), C7-9 verzweigter und linearer Alkylester der 4-hydroxy-3-(2H-benzotriazol-2-yl)-5-(1,1-dimethylethyl)-phenylpropansäure (CAS No. 127519-17-9), Tinuvin^{®} 384, Tinuvin^{®} 213 (Mischung aus 3 Substanzen mit CAS NO. 104810-48-2, 10481047, 1/25322-68-3).

8. Thermoplastisches Polyurethan gemäß Anspruch 6, **dadurch gekennzeichnet, dass** des Benzotriazol (III) in einer Konzentration zwischen 0,01 Gew.-% und 2 Gew.-%, bezogen auf das Gesamtgewicht des Kunststoffes, in dem Kunststoff enthaltend ist.

9. Verfahren zur Herstellung von thermoplastichen Polyurethanen enthaltend sterisch gehindertes, verestertes Amin (I), **dadurch gekennzeichnet, dass** man dem Polyurethan während oder nach der Herstellung ein sterisch gehindertes verestertes Amin (I) mit einem Gehalt an Titan von kleiner 100 ppm, bezogen auf das Gewicht von (I), zugibt, und wobei der Kunststoff insgesamt einen Gehalt an Titan von kleiner 100 ppm, bezogen auf das Gewicht von (I), aufweist.

10. Folien, Schuhsohlen, Rollen, Fasern, Verkleidungen in Automobilen, Wischerblätter, Schläuchen, Kabelstecker, Faltenbälge, Schleppkabel, Kabelummantelungen, Dichtungen, Riemen oder Dämpfungselemente auf der Basis von thermoplastischen Polyurethanen enthaltend sterisch gehindertes, verestertes Amin (I), das einen Gehalt an Titan von kleiner 100 ppm, bezogen auf das Gewicht von (I), aufweist und wobei das thermoplastische Polyurethan insgesamt einen Gehalt an Titan von kleiner 100 ppm, bezogen auf das Gewicht von (I) aufweist.

## Claims

1. A thermoplastic polyurethane comprising sterically hindered, esterified amine (I) which contains less than 100 ppm, based on the weight of (I), of titanium, wherein the following compound is present as (I) in the polyurethane: 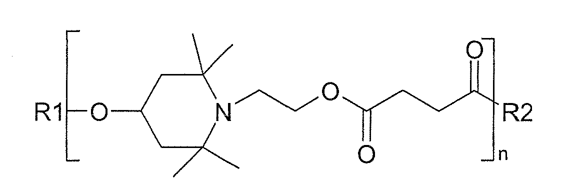 where
n is an integer from 1 to 100,
R1 is a hydrogen atom or straight-chain, branched or cyclic alkyl of 1 to 12 carbon atoms, and
R2 is a hydrogen atom or straight-chain, branched or cyclic alkyl of 1 to 12 carbon atoms or is R1 or O- R1 or N(R1)₂ and wherein the thermoplastic polyurethane has a total content of less than 100 ppm, based on the weight of (I), of titanium.

2. The thermoplastic polyurethane according to claim 1, wherein the sterically hindered, esterified amine is present in the thermoplastic polyurethane in a concentration of from 0.1 to 5% by weight, based on the total weight of the thermoplastic polyurethane.

3. The thermoplastic polyurethane according to claim 1, wherein the plastic comprises a phenolic stabilizer (II).

4. The thermoplastic polyurethane according to claim 3, wherein the plastic comprises, as the phenolic stabilizer (II), at least one of the following compounds: 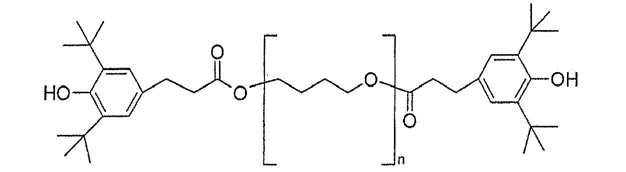 and/or 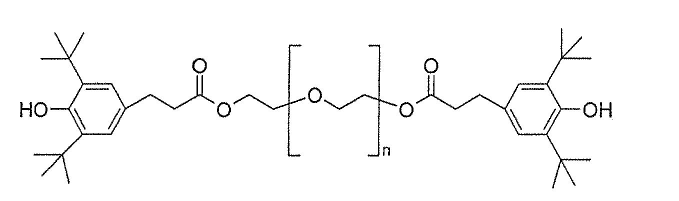 in each case having the following meanings for n: 1-30.

5. The thermoplastic polyurethane according to claim 3, wherein the phenolic stabilizer (II) is present in the polyurethane in a concentration of from 0.1 to 5% by weight, based on the total weight of the polyurethane.

6. The thermoplastic polyurethane according to claim 1 or 3, wherein the polyurethane comprises benzotriazole (III) .

7. The thermoplastic polyurethane according to claim 6, wherein the plastic comprises, as (III), at least one compound from the following group: Tinuvin^{®} P (CAS Reg. No. 2440-22-4), Tinuvin^{®} 329 (CAS Reg. No. 3147-75-9), Tinuvin^{®} 326 (CAS Reg. No. 3896-11-5), Tinuvin^{®} 320 (CAS Reg. No. 3846-71-7), Tinuvin^{®} 571 (CAS Reg. No. 23328-53-2), Tinuvin^{®} 328 (CAS Reg. No. 25973-55-1), Tinuvin^{®} 350 (CAS Reg. No. 36437-37-3, Tinuvin^{®} 327 (CAS Reg. No. 3864-99-1), Tinuvin^{®} 234 (CAS Reg. No. 70321-86-7), Tinuvin^{®} 360 (CAS Reg. No. 103597-45-1), Tinuvin^{®} 840 (CAS Reg. No. 84268-08-6), C7-9 branched and linear alkyl ester of 4-hydroxy-3-(2H-benzotriazol-2-yl)-5-(1,1-dimethylethyl)phenylpropanoic acid (CAS No. 127519-17-9), Tinuvin^{®} 384, Tinuvine^{®} 213 (mixture of 3 substances with CAS No. 104810-48-2, 10481047, 1/25322-68-3).

8. The thermoplastic polyurethane according to claim 6, wherein the benzotriazole (III) is present in the plastic in a concentration of from 0.01 to 2% by weight, based on the total weight of the plastic.

9. A process for the preparation of polyurethanes comprising sterically hindered, esterified amine (I), wherein a sterically hindered esterified amine (I) containing less than 100 ppm, based on the weight of (I), of titanium is added to the polyurethane during or after the preparation, and the plastic has a total content of less than 100 ppm, based on the weight of (I), of titanium.

10. A film, shoe sole, roller, fiber, cladding in automobiles, wiper blade, hose, cable plug, bellows, trailing cable, cable sheath, seal, belt or damping element based on a thermoplastic polyurethane comprising sterically hindered, esterified amine (I) which contains less than 100 ppm, based on the weight of (I), of titanium, the thermoplastic polyurethane having a total content of less than 100 ppm, based on the weight of (1), of titanium.

## Revendications

1. Polyuréthanne thermoplastique contenant une amine estérifiée à empêchement stérique (I) qui présente une teneur en titane inférieure à 100 ppm, par rapport au poids de (I), le composé suivant étant présent dans le polyuréthanne comme (I) : 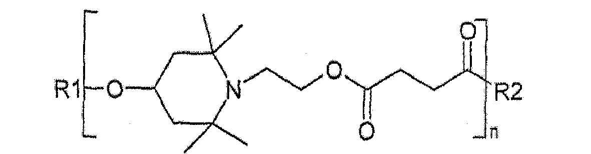 où n, R1 et R2 ont les significations suivantes :
n : un nombre entier de 1 à 100,
R1 : un atome d'hydrogène, des radicaux alkyle linéaires, ramifiés ou cycliques comportant 1 à 12 atomes de carbone,
R2 : un atome d'hydrogène, des radicaux alkyle linéaires, ramifiés ou cycliques comportant 1 à 12 atomes de carbone identiques à R1 ou O-R1 ou N(R1)₂,
le polyuréthanne thermoplastique présentant au total une teneur en titane inférieure à 100 ppm, par rapport au poids de (I).

2. Polyuréthanne thermoplastique suivant la revendication 1, **caractérisé en ce que** l'amine estérifiée à empêchement stérique est contenue dans le polyuréthanne thermoplastique en une concentration comprise entre 0,1 et 5 % en poids, par rapport au poids total du polyuréthanne thermoplastique.

3. Polyuréthanne thermoplastique suivant la revendication 1, **caractérisé en ce que** la substance synthétique contient un stabilisant phénolique (II).

4. Polyuréthanne thermoplastique suivant la revendication 3, **caractérisé en ce que** la substance synthétique contient, comme stabilisant phénolique (II), au moins un des composés suivants : 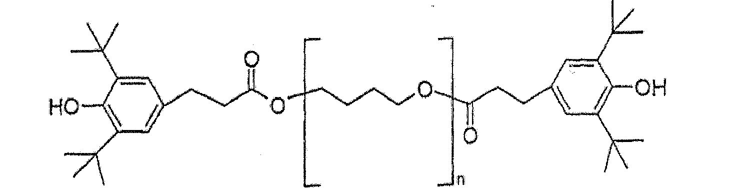 et/ou 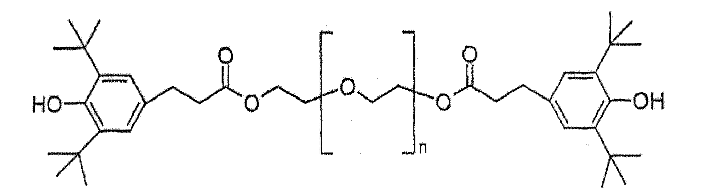 où n a à chaque fois la signification suivante : 1 à 30.

5. Polyuréthanne thermoplastique suivant la revendication 3, **caractérisé en ce que** le stabilisant phénolique (II) est contenu dans le polyuréthanne en une concentration comprise entre 0,1 % en poids et 5 % en poids, par rapport au poids total du polyuréthanne.

6. Polyuréthanne thermoplastique suivant la revendication 1 ou 3, **caractérisé en ce que** le polyuréthanne contient du benzotriazole (III).

7. Polyuréthanne thermoplastique suivant la revendication 6, **caractérisé en ce que** la substance synthétique contient, comme (III), au moins un composé du groupe suivant: Tinuvin^{®} P (CAS Reg. n° 2440-22-4), Tinuvin^{®} 329 (CAS Reg. n° 3147-75-9), Tinuvin^{®} 326 (CAS Reg. n° 3896-11-5), Tinuvin^{®} 320 (CAS Reg. n° 3846-71-7), Tinuvin^{®} 571 (CAS Reg. n° 23328-53-2), Tinuvin^{®} 328 (CAS Reg. n° 25973-55-1), Tinuvin^{®} 350 (CAS Reg. n° 36437-37-3), Tinuvin^{®} 327 (CAS Reg. n° 3864-99-1), Tinuvin^{®} 234 (CAS Reg. n° 70321-86-7), Tinuvin^{®} 360 (CAS Reg. n° 103597-45-1), Tinuvin^{®} 840 (CAS Reg. n° 84268-08-6), des esters alkyliques ramifiés et linéaires en C7-9 de l'acide 4-hydroxy-3-(2H-benzotriazol-2-yl)-5-(1,1-diméthyléthyl)-phénylpropanoïque (CAS n° 127519-17-9), Tinuvin^{®} 384, Tinuvin^{®} 213 (mélange de trois substances ayant les CAS n° 104810-48-2, 10481047, 1/25322-68-3).

8. Polyuréthanne thermoplastique suivant la revendication 6, **caractérisé en ce que** le benzotriazole (III) est contenu dans la substance synthétique en une concentration comprise entre 0,01 % en poids et 2 % en poids, par rapport au poids total de la substance synthétique.

9. Procédé de préparation de polyuréthannes contenant de l'amine estérifiée à empêchement stérique (I), **caractérisé en ce que**, pendant ou après la préparation, on ajoute au polyuréthanne une amine estérifiée à empêchement stérique (I) ayant une teneur en titane inférieure à 100 ppm par rapport au poids de (I), la substance synthétique présentant au total une teneur en titane inférieure à 100 ppm, par rapport au poids de (I).

10. Feuilles, semelles de chaussure, rouleaux, fibres, habillages d'automobiles, lames d'essuie-glace, tuyaux flexibles, connecteurs de câble, soufflets, câbles d'enrouleur, gainages de câble, organes d'étanchéité, courroies ou éléments d'amortissement à base de polyuréthannes thermoplastiques contenant de l'amine estérifiée à empêchement stérique (I), qui présente une teneur en titane inférieure à 100 ppm, par rapport au poids de (I), le polyuréthanne thermoplastique présentant au total une teneur en titane inférieure à 100 ppm par rapport au poids de (I).
